# EUROPEAN PATENT APPLICATION

(11) **EP 4 708 443 A1**
(43) Date of publication of application: **11.03.2026**
(21) Application number: 25184254.8
(22) Date of filing: 20.06.2025
(51) Int. Cl.: H01M 10/0569

(54) **ELECTROLYTE AND SECONDARY BATTERY**

(30) Priority: 23.08.2024 CN 202411172070
(71) Applicant: AESC Japan Ltd., Yokohama-Shi, Kanagawa 220-0012 (JP)
(72) Inventor: YU, Le, Pudong New Area Shanghai, 201315 (CN); SHI, Lei, Pudong New Area Shanghai, 201315 (CN)
(74) Representative: Becker, Eberhard

(57) **Abstract**

An electrolyte and a secondary battery, belonging to the technical field of secondary batteries. The electrolyte includes a lithium salt and a solvent. The solvent includes a cyclic carbonate, a linear carbonate, and a carboxylic ester. A mass percentage of the cyclic carbonate is 8% to 24%. The linear carbonate includes a dimethyl carbonate and at least one of a methyl ethyl carbonate and a diethyl carbonate. A mass percentage of a mass sum of the methyl ethyl carbonate and the diethyl carbonate is 2% to 10%. A mass percentage of the carboxylic ester is 20% to 40%. The carboxylic ester includes a first component and a second component. Viscosities of the first and second components at 25±2°C are respectively 0.4 mPa·s to 0.5 mPa·s and 0.3 mPa·s to 0.4 mPa·s. Mass percentages of the first and second components are respectively 15% to 40% and 0% to 15%.

## Description

### BACKGROUND

### Technical Field

The disclosure relates to the technical field of secondary batteries, and specifically relates to an electrolyte and a secondary battery.

### Description of Related Art

Lithium-ion batteries are widely applied in the fields of consumer electronics, electric vehicles, and energy storage due to advantages of long cycle life, high operating voltage, low selfdischarge rate, no memory effect, and environmental friendliness. In the above application fields, there is an increasing demand for battery endurance and charging rate, and there is an urgent need for a fast-charging battery with higher energy density.

In order to improve battery energy density, battery structure design is developing toward high volumetric energy density, especially those with electrode assemblies having internal winding structures, such as cylindrical cells. As volumetric energy density inside the battery increases, interlayer pressure between wound electrode sheets in the electrode assembly also increases. Under high winding pressure, an electrolyte is difficult to infiltrate between layers of the electrode assembly, which causes negative effects on battery charge-discharge cycling.

To address the problem of insufficient electrolyte wettability, the prior art generally improves electrolyte wettability by increasing content of a low-viscosity solvent in the electrolyte. However, as demand for fast charging of batteries increases, an existing electrolyte is difficult to meet high-rate fast-charging requirements under high winding pressure, resulting in severe degradation of high-temperature storage performance and fast-charging cycle performance of a battery using the existing electrolyte solution.

Therefore, an electrolyte and a secondary battery need to be designed to solve the above technical problem.

### SUMMARY

The disclosure provides an electrolyte and a secondary battery to address the technical problem in the prior art in which an electrolyte is difficult to achieve both wettability and high-temperature stability under high winding pressure, and is unable to meet the requirements of fast charging under high rate conditions.

To achieve the above purpose and other related purposes, the disclosure provides an electrolyte. The electrolyte includes a lithium salt and a solvent. The solvent includes a cyclic carbonate, a linear carbonate, and a carboxylic ester. A mass percentage of the cyclic carbonate relative to the electrolyte is 8% to 24%. The linear carbonate comprises a dimethyl carbonate and at least one of a methyl ethyl carbonate and a diethyl carbonate. A mass percentage of a mass sum of the methyl ethyl carbonate and the diethyl carbonate relative to the electrolyte is 2% to 10%. A mass percentage of the carboxylic ester relative to the electrolyte is 20% to 40%. The carboxylic ester comprises a first component and a second component. A viscosity of the first component at 25±2°C is 0.4 mPa·s to 0.5 mPa·s. A viscosity of the second component at 25±2°C is 0.3 mPa·s to 0.4 mPa·s. A mass percentage of the first component relative to the electrolyte is 15% to 40%. A mass percentage of the second component relative to the electrolyte is 0% to 15%.

In an example of the disclosure, the first component comprises one or more of an ethyl acetate, a methyl propionate, a propyl acetate, and an ethyl propionate. The second component comprises one or more of a methyl acetate, an ethyl formate, and a methyl formate.

In an example of the disclosure, the cyclic carbonate comprises a fluoroethylene carbonate and at least one of an ethylene carbonate and a propylene carbonate.

In an example of the disclosure, a mass percentage of the fluoroethylene carbonate relative to the electrolyte is 2% to 8%.

In an example of the disclosure, the linear carbonate comprises a dimethyl carbonate, a methyl ethyl carbonate, and a diethyl carbonate.

In an example of the disclosure, the electrolyte further comprises an additive, and the additive comprises a 1,3-propane sultone, an ethylene sulfate, and a tetravinylsilane. A mass percentage of the additive relative to the electrolyte is 0.8% to 2%.

In an example, the lithium salt comprises a lithium hexafluorophosphate and a lithium bis(fluorosulfonyl)imide, a mass percentage of the lithium salt relative to the electrolyte is 8% to 20%, and a mass percentage of the lithium bis(fluorosulfonyl)imide relative to the electrolyte is 0% to 2%.

The disclosure further provides a secondary battery. The secondary battery comprises a positive electrode sheet, a negative electrode sheet, a separator, and the electrolyte described in any of the above examples.

In an example of the disclosure, the secondary battery is a cylindrical cell.

In an example of the disclosure, an upper limit of an operating voltage of the secondary battery is greater than 4.15V.

The electrolyte provided in the disclosure achieves excellent fast charging capability and high-temperature stability in a battery with a high energy density winding structure, by optimizing the amounts of solvents having different viscosities so that an overall viscosity of the electrolyte remains at a relatively low level while ensuring sufficient chemical stability of the solvent.

### DESCRIPTION OF THE EMBODIMENTS

The following describes embodiments of the disclosure through specific examples. A person skilled in the art can easily understand other advantages and effects of the disclosure from the contents disclosed in the present specification. The disclosure may also be implemented or applied through other different specific embodiments. Various details in the present specification may also be modified or changed based on different perspectives and applications without departing from the spirit of the disclosure. It should be noted that, under the condition of no conflict, the following embodiments and features in the embodiments may be combined with each other. It should also be understood that the terms used in the embodiments of the disclosure are for describing specific implementation schemes and are not intended to limit the scope of protection of the disclosure. Test methods without specific conditions indicated in the following embodiments are usually carried out under conventional conditions or under conditions recommended by each manufacturer.

For simplicity, only some numerical ranges are explicitly disclosed herein. Every point or individual value between endpoints of the ranges is included in the ranges. Therefore, each point or individual value may be combined with any other point or individual value as its lower limit or upper limit, or combined with other lower limits or upper limits to form a range not explicitly described.

At present, existing technical solutions generally reduce overall viscosity of an electrolyte and improve infiltration performance of the electrolyte by increasing a usage amount of a low-viscosity solvent in the electrolyte (for example, by reducing content of ethylene carbonate and increasing content of dimethyl carbonate in the electrolyte), so as to improve a problem of insufficient infiltration between electrode sheets of the electrolyte under high interlayer pressure of winding. However, as found by the inventors through research, due to poor chemical stability of a low-viscosity solvent, an existing electrolyte solution, due to excessive use of a low-viscosity solvent, causes chemical stability of the electrolyte to deteriorate. The existing electrolyte deteriorates high-temperature performance of the battery, and is also difficult to meet requirements of fast charging at a higher rate.

In view of this, the inventors, based on an in-depth understanding of solution viscosity theory, provide an electrolyte. The electrolyte optimizes types and ratios of solvents, and adjusts usage amounts of high-viscosity solvents and low-viscosity solvents in the electrolyte. By increasing the usage amount of the high-viscosity solvent and reducing the usage amount of the low-viscosity solvent, an overall viscosity of the mixed electrolyte conforms to a logarithmic law, thereby maintaining the overall viscosity of the electrolyte at a relatively low range while ensuring that the solvent of the electrolyte has sufficient chemical stability. As a result, the electrolyte can achieve both high wettability and stability, so that the electrolyte can meet high-rate fast-charging requirements in a battery having a wound electrode assembly.

The above electrolyte includes a lithium salt and a solvent. The solvent includes a cyclic carbonate, a linear carbonate, and a carboxylic ester.

A mass percentage of the cyclic carbonate relative to the electrolyte is any value from 8% to 24%; for example, it may be 8%, 10%, 12%, 14%, 16%, 18%, 20%, 22%, or 24%. Since the cyclic carbonate has higher conductivity and viscosity in the solvent, the cyclic carbonate is maintained within the above appropriate mass percentage range in the electrolyte to ensure both relatively low viscosity and relatively high conductivity of the electrolyte. If a content of the cyclic carbonate in the electrolyte is too high, it will cause the viscosity of the electrolyte to be too high, thereby deteriorating fast-charging performance of the battery. If a content of the cyclic carbonate in the electrolyte is too low, although the viscosity of the electrolyte can be reduced, it will also cause a reduction in conductivity of the electrolyte, thereby also deteriorating fast-charging performance of the battery.

The linear carbonate includes dimethyl carbonate (DMC) and at least one of methyl ethyl carbonate (EMC) and diethyl carbonate (DEC); for example, the linear carbonate may be a combination of methyl ethyl carbonate and dimethyl carbonate, or a combination of diethyl carbonate and dimethyl carbonate, or a combination of dimethyl carbonate, diethyl carbonate, and dimethyl carbonate. It should be noted that, when the linear carbonate is a composition, there is no limitation on a ratio among the components in the composition, and mixing in any ratio is acceptable.

In the linear carbonate, a mass percentage of a mass sum of methyl ethyl carbonate (EMC) and diethyl carbonate (DEC) relative to the electrolyte is any value from 2% to 10%; specifically, when the component included in the linear carbonate is methyl ethyl carbonate, a mass percentage of the methyl ethyl carbonate relative to the electrolyte is any value from 2% to 10%, for example, it may be 2%, 3%, 4%, 5%, 6%, 7%, 8%, 9%, or 10%; when the component included in the linear carbonate is diethyl carbonate, a mass percentage of the diethyl carbonate relative to the electrolyte is any value from 2% to 10%, for example, it may be 2%, 3%, 4%, 5%, 6%, 7%, 8%, 9%, or 10%; when the component included in the linear carbonate is a combination of methyl ethyl carbonate and diethyl carbonate, a mass percentage of a mass sum of methyl ethyl carbonate and diethyl carbonate relative to the electrolyte is any value from 2% to 10%, for example, it may be 2%, 3%, 4%, 5%, 6%, 7%, 8%, 9%, or 10%.

Since methyl ethyl carbonate and diethyl carbonate have higher viscosity and better chemical stability in the solvent, maintaining methyl ethyl carbonate and/or diethyl carbonate within the above appropriate mass percentage range in the electrolyte can ensure high-temperature stability of the electrolyte while avoiding an increase in viscosity of the electrolyte. If a content of methyl ethyl carbonate and/or diethyl carbonate in the electrolyte is too high, it will cause viscosity of the electrolyte to be too high, thereby deteriorating fast-charging performance of the battery. If a content of methyl ethyl carbonate and/or diethyl carbonate in the electrolyte is too low, it will deteriorate chemical stability of the electrolyte, so that a high-temperature storage capacity recovery rate of the battery is significantly degraded.

A mass percentage of the carboxylic ester relative to the electrolyte is 20% to 40%. The carboxylic ester comprises a first component and a second component. A viscosity of the first component at 25±2°C is 0.4 to 0.5 mPa·s. A viscosity of the second component at 25±2°C is 0.3 to 0.4 mPa·s. A mass percentage of the first component relative to the solvent is any value from 15% to 40%; for example, it may be 15%, 17%, 20%, 23%, 25%, 27%, 30%, 33%, 35%, 37%, or 40%. A mass percentage of the second component relative to the electrolyte is less than or equal to 15%, that is, a mass percentage of the second component relative to the electrolyte is any value from 0% to 15%; for example, it may be 0%, 2%, 4%, 5%, 6%, 8%, 10%, 12%, 14%, or 15%.

On a basis of proportions of two relatively high-viscosity components, namely, the cyclic carbonate and the linear carbonate, the high-viscosity first component and the low-viscosity second component in the carboxylic ester are limited to the above mass percentage ranges, so that solvents having each viscosity level constitute an overall viscosity of the electrolyte that conforms to a logarithmic law. Therefore, while maintaining the overall viscosity of the electrolyte at a relatively low range, a conductivity of the electrolyte is ensured not to deteriorate. Moreover, by limiting content of the low-viscosity solvent in the electrolyte, chemical stability of the electrolyte can be effectively maintained, thereby maintaining a high-temperature storage performance of the battery.

In some embodiments, the first component in the carboxylic ester includes one or more of ethyl acetate (EA), methyl propionate (MP), propyl acetate (PA), and ethyl propionate (EP). That is, the first component in the carboxylic ester may be any one of the above-listed items, for example, ethyl acetate, methyl propionate, propyl acetate, or ethyl propionate. The first component in the carboxylic ester may also be a composition of any plurality of the above-listed items, for example, a composition of ethyl acetate and methyl propionate, or a composition of ethyl acetate and propyl acetate, or a composition of ethyl acetate and ethyl propionate, or a composition of ethyl acetate, methyl propionate, and propyl acetate, or a composition of ethyl acetate, methyl propionate, and ethyl propionate, or a composition of ethyl acetate, methyl propionate, propyl acetate, and ethyl propionate. It should be noted that, when the first component in the carboxylic ester is a composition, there is no limitation on a ratio among the components in the composition, and mixing in any ratio is acceptable.

In some embodiments, the second component in the carboxylic ester includes one or more of methyl acetate (MA), ethyl formate (EF), and methyl formate (MF). That is, the second component in the carboxylic ester may be any one of the above-listed items, for example, methyl acetate, ethyl formate, or methyl formate. The second component in the carboxylic ester may also be a composition of any plurality of the above-listed items, for example, a composition of methyl acetate and ethyl formate, or a composition of methyl acetate and methyl formate, or a composition of ethyl formate and methyl formate, or a composition of methyl acetate, ethyl formate, and methyl formate. It should be noted that, when the second component in the carboxylic ester is a composition, there is no limitation on a ratio among the components in the composition, and mixing in any ratio is acceptable.

In some embodiments, the cyclic carbonate includes at least one of fluoroethylene carbonate (FEC), ethylene carbonate (EC), and propylene carbonate (PC); for example, the cyclic carbonate may be a composition of fluoroethylene carbonate and ethylene carbonate, or a composition of fluoroethylene carbonate and propylene carbonate, or a composition of fluoroethylene carbonate, ethylene carbonate, and propylene carbonate. It should be noted that there is no limitation on a ratio among the components in the composition of the cyclic carbonate, and mixing in any ratio is acceptable.

In some embodiments, in the cyclic carbonate, a mass percentage of fluoroethylene carbonate (FEC) relative to the electrolyte is any value from 2% to 8%; for example, it may be 2%, 3%, 4%, 5%, 6%, 7%, or 8%. An appropriate amount of fluoroethylene carbonate in the solvent can ensure both protection effect of the electrolyte for a negative electrode interface and control of gas generation during battery cycling. When a content of fluoroethylene carbonate in the solvent is too high, although excessive fluoroethylene carbonate can improve rate performance of the electrolyte, it easily decomposes under high temperature to generate hydrogen fluoride, which affects high-temperature storage performance of the battery. When a content of fluoroethylene carbonate in the solvent is too low, insufficient fluoroethylene carbonate cannot provide a film-forming protection effect on the negative electrode, which will lead to side reactions between the electrolyte and the negative electrode during cycling, damage cycling stability of the battery, and deteriorate storage capacity of the battery.

In some embodiments, the electrolyte further includes an additive. The additive includes 1,3-propane sultone (PST), ethylene sulfate (DTD), and tetravinylsilane (TVSi). The additive helps form a stable solid electrolyte interphase (SEI) film at the negative electrode interface, can further improve film-forming effect of the electrolyte at the negative electrode interface, enhance the protection effect for the negative electrode interface, and improve charge-discharge cycling performance of the battery.

In some embodiments, a mass percentage of the additive relative to the electrolyte is any value from 0.8% to 2%; for example, it may be 0.8%, 1%, 1.2%, 1.4%, 1.5%, 1.6%, 1.8%, or 2%. When a total content of the additive in the electrolyte is within the above range, it can promote formation of an SEI film at the negative electrode interface without excessively increasing impedance of the battery, thereby affecting fast-charging performance of the battery. When a content of the additive in the electrolyte is too low, it will lead to insufficient SEI film formation at the negative electrode interface, making it difficult to effectively protect the negative electrode, thereby negatively affecting cycling capacity of the battery. When a content of the additive in the electrolyte is too high, it will cause impedance of the SEI film at the negative electrode interface to be too high, negatively affecting fast-charging performance of the battery.

In addition, it should be noted that the lithium salt in the electrolyte may be a conventional type of lithium salt in the art. As an example, the lithium salt may be selected from one or more of lithium hexafluorophosphate (LiPF₆), lithium bis(fluorosulfonyl)imide (LiFSI), lithium tetrafluoroborate (LiBF₄), lithium bis(oxalato)borate (LiBOB), lithium difluoro(oxalato)borate (LiODFB), and lithium bis(trifluoromethanesulfonyl)imide (LiTFSI). Preferably, the lithium salt may be selected from lithium hexafluorophosphate (LiPF₆) having relatively good overall performance. Or, lithium hexafluorophosphate (LiPF₆) may be mainly used, and other lithium salts may be appropriately added to combine their advantages and collectively improve performance of the electrolyte. For example, in some embodiments, the lithium salt includes lithium hexafluorophosphate and lithium bis(fluorosulfonyl)imide. A mass percentage of the lithium salt in the electrolyte is any value from 8% to 20%; for example, it may be 8%, 10%, 12%, 14%, 15%, 16%, 17%, 18%, or 20%. A mass percentage of lithium bis(fluorosulfonyl)imide in the electrolyte is any value from 0% to 2%; for example, it may be 0%, 0.2%, 0.4%, 0.5%, 0.7%, 1%, 1.3%, 1.5%, 1.7%, or 2%. Since an excessively high content of lithium bis(fluorosulfonyl)imide causes relatively serious corrosion to a current collector of an electrode sheet, the content of lithium bis(fluorosulfonyl)imide is limited to the above range in this embodiment to protect the current collector of the electrode sheet.

The electrolyte of the disclosure may be prepared according to a conventional preparation method. For example, the electrolyte is prepared in a glove box, where a content of argon or nitrogen is 99.999%, an actual oxygen content in the glove box is 0.1 ppm, and a moisture content is lower than 10 ppm. In the glove box, the solvent is mixed and stirred, and then the lithium salt is added into the mixed solvent under stirring, and stirring is continued until the lithium salt is completely dissolved. Finally, the additive may be added and uniformly stirred.

The disclosure further provides a secondary battery. The secondary battery includes a positive electrode sheet, a negative electrode sheet, a separator, and the electrolyte according to any one of the above embodiments. During charging and discharging of the battery, lithium ions are embedded into and extracted from the positive electrode sheet and the negative electrode sheet back and forth. The separator is disposed between the positive electrode sheet and the negative electrode sheet and functions as an isolator. The electrolyte functions to conduct lithium ions between the positive electrode sheet and the negative electrode sheet.

A composition and a preparation method of the secondary battery are described in detail below.

The positive electrode sheet includes a positive current collector and a positive active material layer disposed on at least one surface of the positive current collector. The positive current collector is, for example, a foil formed by performing surface treatment on nickel, titanium, aluminum, nickel, silver, stainless steel, or carbon. In addition to the foil, the positive current collector may also be in any one or a combination of multiple forms such as a film, mesh, porous body, foam, or nonwoven fabric. A thickness of the positive current collector is, for example, 8 µm to 15 µm. In one embodiment, the positive current collector is, for example, an aluminum foil, and a thickness of the aluminum foil is, for example, 13 µm. The positive current collector has two opposite surfaces in a thickness direction thereof. The positive active material layer is disposed on either one or both of the two opposite surfaces of the positive current collector. The positive active material layer includes a positive active material, a positive conductive agent, and a positive binder. There is no specific limitation on the positive active material, the positive conductive agent, and the positive binder, and a person skilled in the art may select them according to actual needs.

As an example, the positive active material may be selected from ternary materials, lithium-containing phosphates, and spinel materials. The ternary materials include lithium nickel cobalt manganese oxide, lithium nickel cobalt aluminum oxide, lithium nickel cobalt manganese oxide doped with metal ions, and lithium nickel cobalt aluminum oxide doped with metal ions. The lithium-containing phosphates include lithium manganese iron phosphate, lithium iron phosphate, and lithium manganese phosphate. The positive binder is, for example, selected from polyvinylidene fluoride (PVDF), polytetrafluoroethylene (PTFE), and the like. The positive conductive agent is, for example, selected from one of carbon black, acetylene black, graphene, carbon nanotube, and carbon nanofiber, or a combination of two or more of them mixed in any ratio.

The negative electrode sheet includes a negative current collector and a negative active material layer disposed on at least one surface of the negative current collector. The negative current collector may be made of a material having good conductivity and mechanical strength, for example, a copper foil. The negative current collector has two opposite surfaces in a thickness direction thereof. The negative active material layer is disposed on either one or both of the two opposite surfaces of the negative current collector. The negative active material layer includes a negative active material, a negative conductive agent, a negative binder, and a thickener. There is no specific limitation on specific types of the negative active material, the negative conductive agent, and the negative binder. Materials known in the art that can be used in lithium-ion batteries may be used, and a person skilled in the art may select them according to actual needs.

As an example, the negative active material is selected from one or more combinations of carbon materials and silicon materials. The carbon materials include, for example, hard carbon, artificial graphite, and natural graphite. The silicon materials include, for example, elemental silicon, silicon oxides, and silicon carbides. The negative conductive agent is selected from one of carbon black, acetylene black, graphene, carbon nanotube, and carbon nanofiber, or a combination of two or more of them mixed in any ratio. The negative binder is selected from any one or a combination mixed in any ratio of polyacrylic acid (PAA), sodium polyacrylate (PAAS), polyacrylamide (PAM), polyvinyl alcohol (PVA), and styrene-butadiene rubber (SBR). The thickener is selected from carboxymethyl cellulose (CMC-Na or CMC-Li).

A conventional type of separator in the art is selected. For example, a PE or PP porous membrane may be selected as the separator. A thickness of the separator is 9 to 18 µm, a gas permeability is 180 s/100 mL to 380 s/100 mL, and a porosity is 30% to 50%.

Battery assembly is carried out according to a conventional method. For example, after preparation is completed, the negative electrode sheet, the separator, and the positive electrode sheet are sequentially stacked and wound in order, so that the separator is located between the positive electrode and the negative electrode to serve an isolation function. Then, the wound electrode assembly is packaged into a housing, transferred to a vacuum oven, and dried at 120°C. After 3.0 g/Ah of the electrolyte prepared above is injected, sealing is performed. Electrolyte formation is then carried out, and finally a lithium-ion battery having a capacity of 1 Ah is prepared.

In some embodiments, an upper limit of an operating voltage of the secondary battery is greater than or equal to 4.15 V. For example, in an example, the operating voltage of the secondary battery is 2.5 V to 4.25 V. Since the upper limit of the operating voltage of the secondary battery is mainly determined by the positive active material, the positive active material in this embodiment may be a conventional high-energy-density positive material in the art, such as a high-nickel ternary material or a nickel-manganese spinel material. The high-nickel ternary material is LiNiₐCo_{b}M_{1-a-b}O₂, where 0.8 ≤ a < 1, 0 < b ≤ 0.1, and M is at least one selected from Mn, Al, Ti, Zr, Cu, Ca, Ta, and Mg. For example, the high-nickel ternary material may be LiNi_{0.8}Co_{0.1}Mn_{0.1}O₂.

In some embodiments, the negative active material is a composition of graphite and a silicon material. The silicon material includes at least one of elemental silicon, a silicon oxide compound, and a silicon-carbon composite. The silicon oxide compound may be SiOₓ (0 < x < 2). A mass percentage of the silicon material in the negative active material is less than or equal to 5%; for example, it may be 1%, 2%, 3%, 4%, or 5%.

In the above embodiments, as a content of the silicon material in the negative active material increases, potential volume expansion of the negative electrode sheet during charge-discharge cycling of the battery increases. In the electrolyte, by adding appropriate fluoroethylene carbonate and additive components, an SEI film is continuously formed at an interface of the negative active material to prevent an over-expanded negative electrode from destroying an original SEI film layer on the interface and exposing the interface in the electrolyte, thereby achieving protection of the negative electrode during battery cycling. In an example, a mass percentage of fluoroethylene carbonate relative to the electrolyte is any value from 2% to 8%, and a mass percentage of the additive relative to the electrolyte is any value from 0.8% to 2%.

It should be noted that a structural type of the above secondary battery may not be limited. The secondary battery may be any conventional structure of a secondary battery on the market, such as a pouch battery, a prismatic battery, or a cylindrical cell. In some embodiments, the above secondary battery is a cylindrical cell. Since the structure of the cylindrical cell is different from that of the pouch battery and the prismatic battery, a winding tension of the internal electrode assembly is large, and an interlayer pressure of the wound electrode sheet is large. An existing electrolyte is difficult to achieve both wettability, conductivity, and chemical stability under high winding interlayer pressure, and thus cannot meet fast-charging requirements of the cylindrical cell. Compared with an existing electrolyte solution, the electrolyte provided by the disclosure has both lower viscosity, higher conductivity, and good chemical stability, and can be adapted to fast-charging requirements of a cylindrical cell with high volumetric energy density, and improve cycling performance of the secondary battery under fast-charging cycles.

The technical solution of the disclosure is described in detail below through several specific examples and comparative examples. Unless otherwise specified, raw materials and reagents used in the following embodiments are all commercially available products or can be prepared by conventional methods in the art.

### Example 1

This example provides an electrolyte, and a preparation method of the electrolyte is as follows.

In an argon-atmosphere glove box with a moisture content of <10 ppm, battery-grade ethylene carbonate (EC), propylene carbonate (PC), fluoroethylene carbonate (FEC), methyl ethyl carbonate (EMC), dimethyl carbonate (DMC), ethyl acetate (EA), and methyl acetate (MA) were mixed in corresponding proportions to form a solvent. Then, 1,3-propane sultone (PST), ethylene sulfate (DTD), and tetravinylsilane (TVSi) were added into the solvent as additives. Finally, lithium hexafluorophosphate (LiPF₆) and lithium bis(fluorosulfonyl)imide (LiFSI) were added into the solvent. Main component contents of the electrolyte thus prepared are shown in Table 1. Based on a total mass of the electrolyte being 100%, a mass percentage of the cyclic carbonate (including EC, PC, and FEC) was 16%, wherein a mass percentage of FEC was 5%. EC and PC not shown in the table always supplemented a remaining portion of the cyclic carbonate in a 1:1 ratio. EMC, as one of the linear carbonates, had a mass percentage of 8% in the electrolyte. DMC, another linear carbonate not shown in the table, was always added in a mass percentage sufficient to make the total mass of the electrolyte in each example and comparative example the same. For example, in this example, a mass percentage of DMC specifically added into the electrolyte was 19.6%. A mass percentage of EA, which was added as a solvent having a viscosity of 0.4 mPa·s to 0.5 mPa·s, was 30%. A mass percentage of MA, which was added as a solvent having a viscosity of 0.3 mPa·s to 0.4 mPa·s, was 10%. A mass percentage of lithium hexafluorophosphate was 14%. Mass percentages of lithium bis(fluorosulfonyl)imide and other additives added are all shown in Table 1.

### Example 2

This example provides an electrolyte of the same system as that of Example 1. The difference between this example and Example 1 lies in that ethyl acetate (EA) was replaced with methyl propionate (MP) in equal amounts in the solvent, and methyl acetate (MA) was replaced with methyl formate (MF) in equal amounts.

### Example 3

This example provides an electrolyte of the same system as that of Example 1. The difference between this example and Example 1 lies in that EC and PC were increased in amount in a 1:1 ratio, so that a total content of the cyclic carbonate was increased to 24% of a total mass of the electrolyte.

### Example 4

This example provides an electrolyte of the same system as that of Example 1. The difference between this example and Example 1 lies in that EC and PC were reduced in amount in a 1:1 ratio, so that a total content of the cyclic carbonate was reduced to 8% of a total mass of the electrolyte.

### Example 5

This example provides an electrolyte of the same system as that of Example 1. The difference between this example and Example 1 lies in that a content of FEC in the electrolyte was increased to 8%, and EC and PC were simultaneously reduced in amount in a 1:1 ratio, so as to ensure that a content of the cyclic carbonate in the electrolyte was maintained at 16%.

### Example 6

This example provides an electrolyte of the same system as that of Example 1. The difference between this example and Example 1 lies in that a content of FEC in the electrolyte was reduced to 2%, and EC and PC were simultaneously increased in amount in a 1:1 ratio, so as to ensure that a content of the cyclic carbonate in the electrolyte was maintained unchanged at 16%.

### Example 7

This example provides an electrolyte of the same system as that of Example 1. The difference between this example and Example 1 lies in that a content of EMC in the electrolyte was increased to 10%, and a content of DMC was adaptively adjusted to maintain a total amount of the electrolyte the same as in Example 1.

### Example 8

This example provides an electrolyte of the same system as that of Example 1. The difference between this example and Example 1 lies in that a content of EMC in the electrolyte was reduced to 2%, and a content of DMC was adaptively adjusted to maintain a total amount of the electrolyte the same as in Example 1.

### Example 9

This example provides an electrolyte of the same system as that of Example 1. The difference between this example and Example 1 lies in that a content of EA in the electrolyte was reduced to 15%, a content of MA in the electrolyte was increased to 15%, and a content of DMC was adaptively adjusted to maintain a total amount of the electrolyte the same as in Example 1.

### Example 10

This example provides an electrolyte of the same system as that of Example 1. The difference between this example and Example 1 lies in that a content of EA in the electrolyte was increased to 40%, and a content of MA in the electrolyte was reduced to 0%.

### Example 11

This example provides an electrolyte of the same system as that of Example 1. The difference between this example and Example 1 lies in that a content of EA in the electrolyte was reduced to 15%, a content of MA in the electrolyte was reduced to 5%, and a content of DMC was adaptively adjusted to maintain a total amount of the electrolyte the same as in Example 1.

### Example 12

This example provides an electrolyte of the same system as that of Example 1. The difference between this example and Example 1 lies in that a content of MA in the electrolyte was reduced to 0%, and a content of DMC was adaptively adjusted to maintain a total amount of the electrolyte the same as in Example 1.

### Example 13

This example provides an electrolyte of the same system as that of Example 1. The difference between this example and Example 1 lies in that a content of LiFSI in the electrolyte was adjusted to 2%, and a content of DMC was adaptively adjusted to maintain a total amount of the electrolyte the same as in Example 1.

### Example 14

This example provides an electrolyte of the same system as that of Example 1. The difference between this example and Example 1 lies in that a content of LiFSI in the electrolyte was adjusted to 0%, and a content of DMC was adaptively adjusted to maintain a total amount of the electrolyte the same as in Example 1.

### Example 15

This example provides an electrolyte of the same system as that of Example 1. The difference between this example and Example 1 lies in that a content of the additive DTD in the electrolyte was adjusted to 0.4%, and a content of DMC was adaptively adjusted to maintain a total amount of the electrolyte the same as in Example 1.

### Example 16

This example provides an electrolyte of the same system as that of Example 1. The difference between this example and Example 1 lies in that a content of the additive PST in the electrolyte was adjusted to 0.5%, a content of the additive TVSi in the electrolyte was adjusted to 0.5%, and a content of DMC was adaptively adjusted to maintain a total amount of the electrolyte the same as in Example 1.

### Comparative Example 1

This comparative example provides an electrolyte of the same system as that of Example 1. The difference between this comparative example and Example 1 lies in that EC and PC were increased in amount in a 1:1 ratio, so that a total content of the cyclic carbonate was increased to 30% of a total mass of the electrolyte.

### Comparative Example 2

This comparative example provides an electrolyte of the same system as that of Example 1. The difference between this comparative example and Example 1 lies in that EC and PC were reduced in amount in a 1:1 ratio, so that a total content of the cyclic carbonate was reduced to 6% of a total mass of the electrolyte.

### Comparative Example 3

This comparative example provides an electrolyte of the same system as that of Example 1. The difference between this comparative example and Example 1 lies in that a content of FEC in the electrolyte was increased to 10%, and EC and PC were simultaneously reduced in amount in a 1:1 ratio, so as to ensure that a content of the cyclic carbonate in the electrolyte was maintained unchanged at 16%.

### Comparative Example 4

This comparative example provides an electrolyte of the same system as that of Example 1. The difference between this comparative example and Example 1 lies in that a content of FEC in the electrolyte was reduced to 0%, and EC and PC were simultaneously increased in amount in a 1:1 ratio, so as to ensure that a content of the cyclic carbonate in the electrolyte was maintained unchanged at 16%.

### Comparative Example 5

This comparative example provides an electrolyte of the same system as that of Example 1. The difference between this comparative example and Example 1 lies in that a content of EMC in the electrolyte was increased to 15%, and a content of DMC was adaptively adjusted to maintain a total amount of the electrolyte the same as in Example 1.

### Comparative Example 6

This comparative example provides an electrolyte of the same system as that of Example 1. The difference between this comparative example and Example 1 lies in that a content of EMC in the electrolyte was reduced to 0%, and a content of DMC was adaptively adjusted to maintain a total amount of the electrolyte the same as in Example 1.

### Comparative Example 7

This comparative example provides an electrolyte of the same system as that of Example 1. The difference between this comparative example and Example 1 lies in that a content of EA in the electrolyte was increased to 50%, a content of MA in the electrolyte was reduced to 0%, and a content of DMC was adaptively adjusted to maintain a total amount of the electrolyte the same as in Example 1.

### Comparative Example 8

This comparative example provides an electrolyte of the same system as that of Example 1. The difference between this comparative example and Example 1 lies in that a content of EA in the electrolyte was reduced to 10%, a content of MA in the electrolyte was reduced to 0%, and a content of DMC was adaptively adjusted to maintain a total amount of the electrolyte the same as in Example 1.

### Comparative Example 9

This comparative example provides an electrolyte of the same system as that of Example 1. The difference between this comparative example and Example 1 lies in that a content of EA in the electrolyte was reduced to 15%, a content of MA in the electrolyte was increased to 20%, and a content of DMC was adaptively adjusted to maintain a total amount of the electrolyte the same as in Example 1.

### Comparative Example 10

This comparative example provides an electrolyte of the same system as that of Example 1. The difference between this comparative example and Example 1 lies in that a content of LiFSI in the electrolyte was adjusted to 3%, and a content of DMC was adaptively adjusted to maintain a total amount of the electrolyte the same as in Example 1.

### Comparative Example 11

This comparative example provides an electrolyte of the same system as that of Example 1. The difference between this comparative example and Example 1 lies in that a content of the additive DTD in the electrolyte was adjusted to 0.2%, and a content of DMC was adaptively adjusted to maintain a total amount of the electrolyte the same as in Example 1.

### Comparative Example 12

This comparative example provides an electrolyte of the same system as that of Example 1. The difference between this comparative example and Example 1 lies in that a content of the additive PST in the electrolyte was adjusted to 0.6%, a content of the additive TVSi in the electrolyte was adjusted to 0.6%, and a content of DMC was adaptively adjusted to maintain a total amount of the electrolyte the same as in Example 1.

The electrolytes prepared in Examples 1 to 16 and Comparative Examples 1 to 12 were respectively used in lithium-ion batteries to verify the effects of the disclosure. The preparation process of the lithium-ion battery is as follows.

Preparation of the positive electrode sheet: the positive active material LiNi_{0.8}Co_{0.1}Mn_{0.1}O₂, the positive conductive agent Super P, and the positive binder polyvinylidene fluoride were mixed in a mass ratio of 98:1:1. N-methylpyrrolidone was added as a solvent, and the mixture was stirred in a vacuum mixer until uniform and transparent to obtain a positive slurry. The positive slurry was uniformly coated on an aluminum foil, the aluminum foil was air-dried at room temperature and then transferred to an oven for drying, and then subjected to cold pressing and slitting to obtain the positive electrode sheet.

Preparation of the negative electrode sheet: the negative active material (97% artificial graphite and 3% silicon oxide compound SiOₓ (0 < x < 2)), the negative conductive agent Super P, the negative thickener sodium carboxymethyl cellulose (CMC-Na), and the negative binder styrene-butadiene rubber (SBR) were mixed in a mass ratio of 96:1:1:2. After deionized water was added, the mixture was thoroughly stirred in a vacuum mixer until uniform to obtain a negative slurry. The negative slurry was uniformly coated on a copper foil serving as the negative current collector. After being air-dried at room temperature, the copper foil was transferred to an oven for drying. The dried foil was then subjected to cold pressing, slitting, and other processes to prepare the negative electrode sheet.

Selection of the separator: a polypropylene film with a thickness of 12 µm was used as the separator.

Preparation of the battery: the positive electrode sheet, the separator, and the negative electrode sheet were sequentially stacked so that the separator was located between the positive electrode sheet and the negative electrode sheet to serve as an isolator, and the stacked layers formed a bare battery cell. The prepared positive electrode, separator, and negative electrode were sequentially wound into a roll core, so that the separator was located between the positive electrode and the negative electrode to serve as an isolator. The roll core was then loaded into a housing of a large cylindrical cell in a size of a 4695 cell. After 1.7 g/Ah of the above-prepared electrolyte was injected, sealing was performed. Electrolyte formation was carried out to finally prepare a cylindrical lithium-ion battery (i.e., the lithium-ion battery).

The electrolytes provided in Examples 1 to 16 and Comparative Examples 1 to 12 were subjected to viscosity testing, and the secondary batteries assembled with the electrolytes were subjected to performance testing. The electrolyte parameters of Examples 1 to 16 and Comparative Examples 1 to 12 are shown in Table 1. The test results are shown in Table 2. The test methods were as follows.
(1) Electrolyte viscosity test: a viscosity tester was used to measure a viscosity of the electrolyte at a temperature of 25°C.
(2) Fast-charging performance test of the secondary battery: the battery was charged in a test voltage range of 2.5 V (discharge cut-off voltage) to 4.25 V (charge cut-off voltage) with a 4C current rate in an oven at a specified temperature (high temperature of 45°C). A battery capacity when a negative electrode potential reached -20 mV was recorded, and a SOC (State Of Charge) of the battery at this time was calculated.
(3) High-temperature storage performance test of the secondary battery: first, in a test voltage range of 2.5 V (discharge cut-off voltage) to 4.25 V (charge cut-off voltage), the battery was charged and discharged at a 0.33C current rate under a normal temperature environment (room temperature of 25°C), and an initial discharge capacity was calculated. Then, the battery was charged to full at a 0.33C current rate. The fully charged battery was stored in an oven at a specified temperature (high temperature of 60°C) for 15 days. After that, the battery was taken out and discharged at a 0.33C current rate, and a recovered discharge capacity was calculated. Finally, the above process was repeated every 15 days until the 120th day. A ratio of the recovered discharge capacity on the 120th day to the initial discharge capacity was calculated and recorded as the storage capacity recovery rate.

**Table 1: Electrolyte parameters provided in Examples 1 to 16 and Comparative Examples 1 to 12.**

| Group | Cyclic carbonate (FEC + PC + EC) | | Linear carbonate (DMC, not shown + EMC) | Solvent with viscosity 0.4 mPa·s~0.5 mPa·s | | Solvent with viscosity 0.3 mPa·s~0.4 mPa·s | | LiFSI | PST, DTD, TVSi |
|---|---|---|---|---|---|---|---|---|---|
| | Total amount | FEC | EMC | EA | MP | MA | EF | | |
| Example 1 | 16% | 5% | 8% | 30% | | 10% | | 1% | 0.2%,1%,0.2% |
| Example 2 | 16% | 5% | 8% | | 30% | | 10% | 1% | 0.2%,1%,0.2% |
| Example 3 | 24% | 5% | 8% | 30% | | 10% | | 1% | 0.2%,1%,0.2% |
| Example 4 | 8% | 5% | 8% | 30% | | 10% | | 1% | 0.2%,1%,0.2% |
| Example 5 | 16% | 8% | 8% | 30% | | 10% | | 1% | 0.2%,1%,0.2% |
| Example 6 | 16% | 2% | 8% | 30% | | 10% | | 1% | 0.2%,1%,0.2% |
| Example 7 | 16% | 5% | 10% | 30% | | 10% | | 1% | 0.2%,1%,0.2% |
| Example 8 | 16% | 5% | 2% | 30% | | 10% | | 1% | 0.2%,1%,0.2% |
| Example 9 | 16% | 5% | 8% | 15% | | 15% | | 1% | 0.2%,1%,0.2% |
| Example 10 | 16% | 5% | 8% | 40% | | 0% | | 1% | 0.2%,1%,0.2% |
| Example 11 | 16% | 5% | 8% | 15% | | 5% | | 1% | 0.2%,1%,0.2% |
| Example 12 | 16% | 5% | 8% | 30% | | 0% | | 1% | 0.2%,1%,0.2% |
| Example 13 | 16% | 5% | 8% | 30% | | 10% | | 2% | 0.2%,1%,0.2% |
| Example 14 | 16% | 5% | 8% | 30% | | 10% | | 0% | 0.2%,1%,0.2% |
| Example 15 | 16% | 5% | 8% | 30% | | 10% | | 1% | 0.2%,0.4%,0.2 % |
| Example 16 | 16% | 5% | 8% | 30% | | 10% | | 1% | 0.5%,1%,0.5% |
| Comparative Example 1 | 30% | 5% | 8% | 30% | | 10% | | 1% | 0.2%,1%,0.2% |
| Comparative Example 2 | 6% | 5% | 8% | 30% | | 10% | | 1% | 0.2%,1%,0.2% |
| Comparative Example 3 | 16% | 10% | 8% | 30% | | 10% | | 1% | 0.2%,1%,0.2% |
| Comparative Example 4 | 16% | 0% | 8% | 30% | | 10% | | 1% | 0.2%,1%,0.2% |
| Comparative Example 5 | 16% | 5% | 15% | 30% | | 10% | | 1% | 0.2%,1%,0.2% |
| Comparative Example 6 | 16% | 5% | 0% | 30% | | 10% | | 1% | 0.2%,1%,0.2% |
| Comparative Example 7 | 16% | 5% | 8% | 50% | | 0% | | 1% | 0.2%,1%,0.2% |
| Comparative Example 8 | 16% | 5% | 8% | 10% | | 0% | | 1% | 0.2%,1%,0.2% |
| Comparative Example 9 | 16% | 5% | 8% | 15% | | 20% | | 1% | 0.2%,1%,0.2% |
| Comparative Example 10 | 16% | 5% | 8% | 30% | | 10% | | 3% | 0.2%,1%,0.2% |
| Comparative Example 11 | 16% | 5% | 8% | 30% | | 10% | | 1% | 0.2%,0.2%,0.2 % |
| Comparative Example 12 | 16% | 5% | 8% | 30% | | 10% | | 1% | 0.6%,1%,0.6% |

The contents in Table 1 are all mass percentages of the respective components relative to the electrolyte.

**Table 2: Performance test results of the batteries assembled in Examples 1 to 16 and Comparative Examples 1 to 12.**

| Group | Viscosity (mPa·s) | Battery SOC corresponding to negative electrode potential of -20 mV | Storage capacity recovery rate after 120 days |
|---|---|---|---|
| Example 1 | 1.5 | 76% | 94.3% |
| Example 2 | 1.5 | 76% | 94.2% |
| Example 3 | 2.6 | 70% | 95.4% |
| Example 4 | 1.1 | 77% | 94.0% |
| Example 5 | 1.5 | 78% | 94.1% |
| Example 6 | 1.5 | 74% | 94.7% |
| Example 7 | 1.7 | 74% | 94.7% |
| Example 8 | 1.3 | 78% | 93.9% |
| Example 9 | 1.7 | 74% | 94.3% |
| Example 10 | 1.7 | 74% | 94.5% |
| Example 11 | 2.2 | 71% | 95.5% |
| Example 12 | 1.9 | 72% | 94.8% |
| Example 13 | 1.5 | 77% | 94.1% |
| Example 14 | 1.5 | 76% | 94.4% |
| Example 16 | 1.5 | 78% | 94.1% |
| Example 17 | 1.6 | 70% | 96.8% |
| Comparative Example 1 | 3.1 | 64% | 95.9% |
| Comparative Example 2 | 1 | 75% | 93.3% |
| Comparative Example 3 | 1.5 | 78% | 93.6% |
| Comparative Example 4 | 1.5 | 74% | 85.8% |
| Comparative Example 5 | 2 | 71% | 94.8% |
| Comparative Example 6 | 1.3 | 78% | 93.2% |
| Comparative Example 7 | 1.3 | 79% | 93.1% |
| Comparative Example 8 | 2.5 | 67% | 95.6% |
| Comparative Example 9 | 1.3 | 79% | 93.0% |
| Comparative Example 10 | 1.5 | 78% | 87.5% |
| Comparative Example 11 | 1.5 | 77% | 93.7% |
| Comparative Example 12 | 1.7 | 66% | 96.8% |

According to the test results of Examples 1 and 2, it was found that solvents originating from the same viscosity range have similar chemical stability and have the same effect on the overall viscosity of the electrolyte. Therefore, replacing the type of solvent within the same viscosity range has little effect on fast-charging performance and high-temperature storage performance of the battery.

By comparing the test results of Examples 1, 3, 4 and Comparative Examples 1 and 2, it can be known that when the cyclic carbonate in the electrolyte is maintained within an appropriate mass percentage range of 8% to 24%, it can ensure that a conductivity of the electrolyte is not reduced while regulating the low viscosity of the electrolyte. When the content of the cyclic carbonate in the electrolyte is reduced, although the viscosity of the electrolyte can be lowered, the conductivity of the electrolyte will also be reduced. When the mass percentage of the cyclic carbonate in the electrolyte is reduced to below 8%, the fast-charging performance of the battery is deteriorated. At the same time, when the mass percentage of the cyclic carbonate in the electrolyte is increased to above 24%, the viscosity of the electrolyte becomes too high, thereby deteriorating the fast-charging performance of the battery.

By comparing the test results of Examples 1, 5, 6 and Comparative Examples 3, 4, it can be known that when a mass percentage of FEC in the electrolyte is within an appropriate range of 2% to 8%, high-temperature stability performance of the electrolyte and a protection effect for the negative electrode interface can both be ensured. When a mass percentage of FEC in the electrolyte is greater than 8%, excessive FEC easily decomposes at high temperature to generate hydrogen fluoride, thereby deteriorating high-temperature storage performance of the battery. When a mass percentage of FEC in the solvent is less than 2%, insufficient FEC cannot play a role in forming a film on and protecting the negative electrode, which causes side reactions between the electrolyte and the negative electrode during cycling, damages cycling stability of the battery, and also deteriorates high-temperature storage performance of the battery.

By comparing the test results of Examples 1, 7, 8 and Comparative Examples 5, 6, it can be known that when a mass percentage of EMC in the electrolyte is within an appropriate range of 2% to 10%, high-temperature stability of the electrolyte can be ensured, an increase in viscosity of the electrolyte can be avoided, and fast-charging performance and high-temperature storage performance of the battery can be improved. If a content of EMC in the electrolyte is higher than 10%, it will cause viscosity of the electrolyte to be too high, thereby deteriorating fast-charging performance of the battery. If a content of EMC in the electrolyte is lower than 2%, chemical stability of the electrolyte will be deteriorated, and a storage capacity recovery rate of the battery under high temperature will be significantly reduced.

By comparing the test results of Examples 1, 9 to 12 and Comparative Examples 7 to 9, it can be known that contents of carboxylic esters with different viscosities significantly affect fast-charging performance and high-temperature storage performance of the battery. The higher the usage amount of the low-viscosity carboxylic ester solvent, the stronger the fast-charging capability of the battery. The improvement in fast-charging capability of the battery by the same content of the low-viscosity carboxylic ester is far higher than that by the high-viscosity carboxylic ester. Therefore, increasing the usage amount of the low-viscosity component in the carboxylic ester can reduce a total usage amount of carboxylic esters in the electrolyte and keep viscosity of the electrolyte at a relatively low level. However, as the usage amount of the low-viscosity carboxylic ester increases, chemical stability of the electrolyte as a whole decreases, which in turn deteriorates high-temperature storage performance of the battery. Therefore, a content of the low-viscosity carboxylic ester in the electrolyte is limited to below 15%, and a total usage amount of carboxylic esters is maintained below 40%, so as to maintain high-temperature storage performance of the battery.

By comparing the test results of Examples 1, 13, 14 and Comparative Example 10, a necessity of limiting the content of LiFSI in the electrolyte is demonstrated. When a mass percentage of LiF SI in the electrolyte is higher than 2%, corrosion of LiF SI to the current collector is relatively serious, which affects reliability of the battery.

By comparing the test results of Examples 1, 15, 16 and Comparative Examples 11, 12, it can be known that when a total content of the additives in the electrolyte is within an appropriate range of 0.8% to 2%, formation of the SEI film at the negative electrode interface can be promoted without excessively increasing impedance of the battery. When a mass percentage of the additives in the electrolyte is lower than 0.8%, formation of the SEI film at the negative electrode interface is insufficient, making it difficult to effectively protect the negative electrode, thereby negatively affecting cycling capacity of the battery. When a mass percentage of the additives in the electrolyte is higher than 2%, impedance of the SEI film at the negative electrode interface becomes too high, negatively affecting fast-charging performance of the battery.

## Claims

1. An electrolyte, comprising:
a lithium salt;
a solvent, wherein the solvent comprises a cyclic carbonate, a linear carbonate, and a carboxylic ester;
wherein a mass percentage of the cyclic carbonate relative to the electrolyte is 8% to 24%, the linear carbonate comprises a dimethyl carbonate and at least one of a methyl ethyl carbonate and a diethyl carbonate, a mass percentage of a mass sum of the methyl ethyl carbonate and the diethyl carbonate relative to the electrolyte is 2% to 10%, a mass percentage of the carboxylic ester relative to the electrolyte is 20% to 40%, the carboxylic ester comprises a first component and a second component, a viscosity of the first component at 25±2°C is 0.4 mPa·s to 0.5 mPa·s, a viscosity of the second component at 25±2°C is 0.3 mPa·s to 0.4 mPa·s, a mass percentage of the first component relative to the electrolyte is 15% to 40%, and a mass percentage of the second component relative to the electrolyte is 0% to 15%.

2. The electrolyte according to claim 1, wherein the first component comprises one or more of an ethyl acetate, a methyl propionate, a propyl acetate, and an ethyl propionate, and the second component comprises one or more of a methyl acetate, an ethyl formate, and a methyl formate.

3. The electrolyte according to claim 1, wherein the cyclic carbonate comprises a fluoroethylene carbonate and at least one of an ethylene carbonate and a propylene carbonate.

4. The electrolyte according to claim 3, wherein a mass percentage of the fluoroethylene carbonate relative to the electrolyte is 2% to 8%.

5. The electrolyte according to claim 1, wherein the linear carbonate comprises a dimethyl carbonate, a methyl ethyl carbonate, and a diethyl carbonate.

6. The electrolyte according to claim 1, wherein the electrolyte further comprises an additive, and the additive comprises a 1,3-propane sultone, an ethylene sulfate, and a tetravinylsilane, a mass percentage of the additive relative to the electrolyte is 0.8% to 2%.

7. The electrolyte according to claim 1, wherein the lithium salt comprises a lithium hexafluorophosphate and a lithium bis(fluorosulfonyl)imide, a mass percentage of the lithium salt relative to the electrolyte is 8% to 20%, and a mass percentage of the lithium bis(fluorosulfonyl)imide relative to the electrolyte is 0% to 2%.

8. A secondary battery, comprising a positive electrode sheet, a negative electrode sheet, a separator, and the electrolyte according to any one of claims 1 to 7.

9. The secondary battery according to claim 8, wherein the secondary battery is a cylindrical cell.

10. The secondary battery according to claim 8, wherein an upper limit of an operating voltage of the secondary battery is greater than 4.15V.
